# EUROPÄISCHE PATENTSCHRIFT

(11) **EP 3 696 232 B1**
(45) Veröffentlichungstag und Bekanntmachung des Hinweises auf die Patenterteilung: **25.08.2021**
(21) Anmeldenummer: 19157459.9
(22) Anmeldetag: 15.02.2019
(51) Int. Cl.: C08L 67/02

(54) **SPRITZGUSSARTIKEL**
INJECTION MOULDED ITEM
ARTICLE MOULÉ PAR INJECTION

(43) Veröffentlichungstag der Anmeldung: 19.08.2020
(73) Patentinhaber: BASF SE, 67056 Ludwigshafen am Rhein (DE)
(72) Erfinder: Kohl, Joerg, 67056 Ludwigshafen (DE); Schick, Michael Bernhard, 67056 Ludwigshafen (DE); Lohmann, Jerome, 67056 Ludwigshafen (DE); Bussmann, Martin, Dr., 67056 Ludwigshafen (DE); Witt, Timo Benjamin, 67056 Ludwigshafen (DE)
(74) Vertreter: BASF IP Association

(56) Entgegenhaltungen:
- WO-A1-2015/169660

## Beschreibung

Die vorliegende Erfindung betrifft einen Spritzgussartikel mit einer HDT-B nach DIN EN ISO 75-2:2004-09 von 79 bis 105°C enthaltend:
i) 55 bis 65 Gew.-%, bezogen auf das Gesamtgewicht der Komponenten i bis v, eines biologisch abbaubaren Polyesters enthaltend:
   i-a) 80 bis 100 mol %, bezogen auf die Komponenten i-a bis i-b, Bernsteinsäure;
   i-b) 0 bis 20 mol %, bezogen auf die Komponenten i-a bis i-b, einer oder mehrerer C₆-C₂₀ Dicarbonsäuren;
   i-c) 98 bis 102 mol %, bezogen auf die Komponenten i-a bis i-b, 1,3 Propandiol oder 1,4-Butandiol;
   i-d) 0 bis 1 Gew.- %, bezogen auf die Komponenten i-a bis i-c eines Kettenverlängerers oder Verzweigers;
ii) 3 bis 10 Gew.- %, bezogen auf das Gesamtgewicht der Komponenten i bis v, eines aliphatisch-aromatischen Polyesters enthaltend:
   ii-a) 30 bis 70 mol %, bezogen auf die Komponenten ii-a bis ii-b, einer C₆-C₁₈-Dicarbonsäure;
   ii-b) 30 bis 70 mol %, bezogen auf die Komponenten ii-a bis ii-b, Terephthalsäure;
   ii-c) 98 bis 100 mol %, bezogen auf die Komponenten ii-a bis ii-b, 1,3 Propandiol oder 1,4-Butandiol;
   ii-d) 0 bis 1 Gew.- %, bezogen auf die Komponenten ii-a bis ii-c eines Kettenverlängerers oder Verzweigers;
iii) 16,2 bis 30,65 Gew.-%, bezogen auf das Gesamtgewicht der Komponenten i bis v, Polymilchsäure;
iv) 4 bis 15 Gew.-%, bezogen auf das Gesamtgewicht der Komponenten i bis v, mindestens eines mineralischen Füllstoffs;
v) 0,35 bis 0,8 Gew.-%, bezogen auf das Gesamtgewicht der Komponenten i bis v, mindestens eines Entformungshilfsmittels;
wobei für den Compound der Komponenten i bis v gilt, dass das Verhältnis der Komponente i zur Komponente iii im Compound 2,0 bis 3,2 beträgt und dass der MVR nach DIN EN 1133-1 vom 01.03.2012 (190°C, 2,16 kg) des Compounds 8 bis 50 cm³/10 min beträgt.

Derart wärmeformbeständige Artikel eignen sich zur Herstellung von Single use items wie Kaffeekapseln, Deckel für Heißgetränke, Besteck, Behältnisse zur Heißabfüllung und Mikrowellengeschirr.

Mit Füllstoff versehene, biologisch abbaubare Polymermischungen, die ein weiches Polymer wie beispielsweise einen aliphatisch-aromatischen Polyester (PBAT) und ein steifes Polymer wie beispielsweise Polymilchsäure (PLA) enthalten, sind aus der US 6,573,340 und der WO 2005/063881 bekannt. Weiterhin sind gefüllte Polymermischungen aus Polybutylensuccinat (PBS) und PLA aus der WO 2013/000847 und aus PBAT, PBS und PLA aus der EP 1561785 bekannt. Die aus den letzten beiden Schriften bekannten Polymermischungen sind zwar für den Spritzguss geeignet, sind jedoch wegen ihrer eingeschränkten Wärmeformbeständigkeit und ihrer mittelmäßigen Schlagzähfestigkeit für Anwendungen wie Kaffeekapseln, Deckel für Heißgetränke oder Mikrowellengeschirr nicht geeignet.

Aus der EP 3140350 sind Spritzgussartikel bekannt, die hinsichtlich der Wärmefombeständigkeit und Schlagzähfestigkeit verbessert sind. Allerdings erwiesen sich diese Systeme bei der Herstellung von single use items mit geringer Wandstärke oder bei der Herstellung in Mehrfachkavitäten-Werkzeugen als teilweise nicht prozessfähig aus.

Ziel der vorliegenden Erfindung war es somit Spritzgussartikel bereitzustellen, die eine geringe Wandstärke von kleiner 1 mm und vorzugsweise kleiner 0,8 mm aufweisen bzw. auch in Mehrfachkavitäten-Werkzeugen von vorzugsweise mehr als 8 und insbesondere bevorzugt mehr als 16 Kavitäten hergestellt werden können.

Überraschenderweise weist dieses Eigenschaftsprofil ein Spritzgussartikel auf enthaltend:
i) 55 bis 65 Gew.-%, vorzugsweise 58 bis 64 Gew.-%, bezogen auf das Gesamtgewicht der Komponenten i bis v, eines biologisch abbaubaren Polyesters enthaltend:
   i-a) 80 bis 100 mol %, bezogen auf die Komponenten i-a bis i-b, Bernsteinsäure;
   i-b) 0 bis 20 mol %, bezogen auf die Komponenten i-a bis i-b, einer oder mehrerer C₆-C₂₀ Dicarbonsäuren;
   i-c) 99 bis 102 mol %, vorzugsweise 99 bis 100 mol%, bezogen auf die Komponenten i-a bis i-b, 1,3 Propandiol oder 1,4-Butandiol;
   i-d) 0 bis 1 Gew.- %, bezogen auf die Komponenten i-a bis i-c eines Kettenverlängerers oder Verzweigers;
ii) 3 bis 10 Gew.- %, vorzugsweise 4 bis 8 Gew.-%, bezogen auf das Gesamtgewicht der Komponenten i bis v, eines aliphatisch-aromatischen Polyesters enthaltend:
   ii-a) 30 bis 70 mol %, bezogen auf die Komponenten ii-a bis ii-b, einer C₆-C₁₈-Dicarbonsäure;
   ii-b) 30 bis 70 mol %, bezogen auf die Komponenten ii-a bis ii-b, Terephthalsäure;
   ii-c) 99 bis 100 mol %, bezogen auf die Komponenten ii-a bis ii-b, 1,3 Propandiol oder 1,4-Butandiol;
   ii-d) 0 bis 1 Gew.- %, bezogen auf die Komponenten ii-a bis ii-c eines Kettenverlängerers oder Verzweigers;
iii) 16,2 bis 30,65 Gew.-%, vorzugsweise 19,3 bis 28 Gew.-%, bezogen auf das Gesamtgewicht der Komponenten i bis v, Polymilchsäure;
iv) 4 bis 15 Gew.-%, vorzugsweise 5,55 bis 12 Gew.-%, bezogen auf das Gesamtgewicht der Komponenten i bis v, mindestens eines mineralischen Füllstoffs;
v) 0,35 bis 0,8 Gew.-%, vorzugsweise 0,45 bis 0,7 Gew.-%, bezogen auf das Gesamtgewicht der Komponenten i bis v, mindestens eines Entformungshilfsmittels
wobei für den Compound der Komponenten i bis v gilt, dass das Verhältnis der Komponente i zur Komponente iii im Compound 2,0 bis 3,2 beträgt und dass der MVR nach DIN EN 1133-1 vom 01.03.2012 (190°C, 2,16 kg) des Compounds 8 bis 50 cm³/10 min und vorzugsweise 12 bis 40 cm³/10 min beträgt. Weiterhin liegt die HDT-B Temperatur nach DIN EN ISO 75-2:2004-09 der aus diesen Compounds hergestellten Artikel bei 79 bis 105 °C vorzugsweise bei 85 bis 100°C und gleichzeitig weisen diese Artikel vorzugsweise eine Charpy-Schlagzähigkeit gemäß DIN EN 179-1/1eU:2000+Amd.A (Nichtinstrumentierte Schlagzähigkeitsprüfung vom 01.06.2001, gemessen bei 23 °C, 50% relativer Feuchte) von größer 80 kJ/m², insbesondere von 90 bis 250 kJ/m² auf.

Im Folgenden wird die Erfindung näher beschrieben.

Die für die Erfindung geeigneten aliphatischen Polyester i sind in der WO 2010/034711 näher beschrieben, auf die hier ausdrücklich Bezug genommen wird.

Polyester i sind in der Regel wie folgt aufgebaut:
i-a) 80 bis 100 mol %, bezogen auf die Komponenten i-a bis i-b, Bernsteinsäure;
i-b) 0 bis 20 mol %, bezogen auf die Komponenten i-a bis i-b, einer oder mehrerer C₆-C₂₀ - Dicarbonsäuren;
i-c) 99 bis 102 mol %, vorzugsweise 99 bis 100 mol %, bezogen auf die Komponenten i-a bis i-b, 1,3 Propandiol oder 1,4-Butandiol;
i-d) 0 bis 1 Gew.- %, bezogen auf die Komponenten i-a bis i-c eines Kettenverlängerers oder Verzweigers;

Die Synthese der beschriebenen Polyester i erfolgt vorzugsweise in einer direkten Polykondensationsreaktion der einzelnen Komponenten. Die Dicarbonsäurederivate werden dabei zusammen mit dem Diol in Anwesenheit eines Umesterungskatalysators direkt zum Polykondensat hohen Molekulargewichts umgesetzt. Auf der anderen Seite kann der Copolyester i auch durch Umesterung von Polybutylensuccinat (PBS) mit C₆-C₂₀-Dicarbonsäuren in Gegenwart von Diol gewonnen werden. Als Katalysatoren werden üblicherweise Zink-, Aluminium- und insbesondere Titankatalysatoren eingesetzt. Titankatalysatoren wie Tetra(isopropyl)orthotitanat und insbesondere Tetraisobutoxytitanat (TBOT) haben gegenüber den in der Literatur häufig verwendeten Zinn-, Antimon-, Kobalt- und Bleikatalysatorenwie beispielsweise Zinndioctanoat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie unmittelbar in die Umwelt gelangen.

Die Bernsteinsäure oder ein Gemisch der Dicarbonsäuren wird im Allgemeinen in Anwesenheit eines Überschusses an Diol zusammen mit dem Katalysator in der Regel zunächst während eines Zeitraumes von etwa 60-180 min auf eine Innentemperatur von 170 bis 230 °C erhitzt und entstehendes Wasser abdestilliert. Anschließend wird die Schmelze des so erhaltenen Präpolyesters üblicherweise bei einer Innentemperatur von 200 zu 250 °C innerhalb von 3 bis 6 Stunden bei vermindertem Druck unter Abdestillieren freiwerdenden Diols bis zur gewünschten Viskosität mit einer Viskositätszahl (VZ) von 100 bis 450 mL/g und vorzugsweise 120 bis 250 mL/g kondensiert.

Die erfindungsgemäßen Polyester i lassen sich darüber hinaus nach den in JP 2008-45117 und EP-A 488 617 beschriebenen Verfahren herstellen. Als vorteilhaft hat es sich erwiesen, zunächst die Komponenten a bis c zu einem Präpolyester mit einer VZ von 50 bis 100 mL/g, vorzugsweise 60 bis 80 mL/g umzusetzen und diesen anschließend mit einem Kettenverlängerer i-d, beispielsweise mit Diisocyanaten oder mit epoxidhaltigen Polymethacrylaten in einer Kettenverlängerungsreaktion zu einem Polyester i mit einer VZ von 100 bis 450 mL/g, vorzugsweise 150 bis 300 mL/g umzusetzen.

Als Säurekomponente i-a werden 80 bis 100 mol %. bezogen auf die Säurekomponenten a und b, vorzugsweise 90 bis 99 mol%, und insbesondere bevorzugt 92 bis 98 mol% Bernsteinsäure eingesetzt. Bernsteinsäure ist auf petrochemischem Weg sowie vorzugsweise aus nachwachsenden Rohstoffen wie beispielsweise in EPA 2185682 beschrieben zugänglich. EPA 2185682 offenbart ein biotechnologisches Verfahren zur Herstellung von Bernsteinsäure und 1,4-Butandiol ausgehend von unterschiedlichen Kohlehydraten mit Mikroorganismen aus der Klasse der *Pasteurellaceae.*

Säurekomponente i-b wird in 0 bis 20 mol%, vorzugsweise 1 bis 10 mol%, und insbesondere bevorzugt 2 bis 8 mol% bezogen auf die Säurekomponenten i-a und i-b, eingesetzt.

Unter C₆-C₂₀-Dicarbonsäuren b sind insbesondere Adipinsäure, Korksäure, Azelainsäure, Sebazinsäure, Brassylsäure und/oder C₁₈-Dicarbonsäure zu verstehen. Bevorzugt sind Korksäure, Azelainsäure, Sebazinsäure und/oder Brassylsäure. Die obengenannten Säuren sind aus nachwachsenden Rohstoffen zugänglich. Beispielsweise Sebazinsäure ist aus Rizinusöl zugänglich. Derartige Polyester zeichnen sich durch ein exzellentes biologisches Abbauverhalten aus [Literatur: Polym. Degr. Stab. 2004, 85, 855-863].

Die Dicarbonsäuren i-a und i-b können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden. Dabei können die Dicarbonsäuren oder deren esterbildenden Derivate, einzeln oder als Gemisch eingesetzt werden.

Die Diole 1,3-Propandiol und 1,4-Butandiol sind ebenfalls aus nachwachsenden Rohstoffen zugänglich. Es können auch Mischungen der beiden Diole verwendet werden. Aufgrund der höheren Schmelztemperaturen und der besseren Kristallisation des gebildeten Copolymers ist 1,4-Butandiol als Diol bevorzugt.

In der Regel wird zu Beginn der Polymerisation das Diol (Komponente i-c) zu den Säuren (Komponenten i-a und i-b) in einem Verhältnis von Diol zu Disäuren von 1,0:1 bis 2,5:1 und vorzugsweise 1,3:1 bis 2,2:1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Disäure/Diol-Verhältnis von 0,98 bis 1,00 verstanden.

In einer Ausführungsform werden 0 bis 1 Gew-%, vorzugsweise 0,1 bis 0,9 Gew.-% und insbesondere bevorzugt 0,1 bis 0,8 Gew.-% bezogen auf das Gesamtgewicht der Komponenten i-a bis i-b, eines Verzweiger i-d und/oder Kettenverlängerers i-d' ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere einem epoxidhaltigen Poly(meth)acrylats), einem mindestens trifunktionellen Alkohol oder einer mindestens trifunktionellen Carbonsäure eingesetzt. In der Regel werden keine Verzweiger, sondern lediglich Kettenverlängerer eingesetzt.

Als bifunktionelle Kettenverlängerer eignen sich beispielsweise Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat,1,6-Hexamethylendiisocyanat, Isophorondiisocyanat oder Methylen-bis(4-isocyanatocyclo-hexan) verstanden. Besonders bevorzugte sind Isophorondiisocyanat und insbesondere 1,6-Hexamethylendiisocyanat.

Unter aliphatischen Polyestern i werden insbesondere Polyester wie Polybutylensuccinat (PBS), Polybutylensuccinat-co-adipat (PBSA), Polybutylensuccinat-co-sebacat (PBSSe), Polybutylensuccinat-co-azelat (PBSAz) oder Polybutylensuccinat-co-brassylat (PBSBr) verstanden. Die aliphatischen Polyester PBS und PBSA werden beispielsweise von Showa Highpolymer unter dem Namen Bionolle® und von Mitsubishi unter dem Namen BioPBS® vermarktet. Neuere Entwicklungen sind in der WO 2010/034711 beschrieben.

Die Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 50000 g/mol, ein gewichtsmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 100 bis 400 g/mL (gemessen in o-Dichlorbenzol/Phenol (Gewichtsverhältnis 50/50)). Der Schmelzpunkt liegt im Bereich von 85 bis 130, bevorzugt im Bereich von 95 bis 120°C. Der MVR Bereich nach DIN EN 1133-1 liegt im Bereich von 8 bis 50 und insbesondere 15 bis 40 cm³/10 min (190 °C, 2,16 kg).

Unter aliphatisch-aromatischen Polyestern ii sind lineare, kettenverlängerte und gegebenenfalls verzweigte und kettenverlängerte Polyester zu verstehen, wie beispielsweise in der WO 96/15173 bis 15176 oder in der WO 98/12242, auf die ausdrücklich Bezug genommen wird, beschrieben. Mischungen unterschiedlicher teilaromatischer Polyester kommen ebenso in Betracht. Interessante jüngere Entwicklungen basieren auf nachwachsenden Rohstoffen (siehe WO 2010/034689). Insbesondere sind unter Polyestern ii Produkte wie ecoflex® (BASF SE) zu verstehen.

Zu den bevorzugten Polyestern ii zählen Polyester, die als wesentliche Komponenten enthalten:
ii-a) 30 bis 70 mol-%, vorzugsweise 40 bis 60 und insbesondere bevorzugt 50 bis 60 mol-%, bezogen auf die Komponenten ii-a) bis ii-b), einer aliphatischen Dicarbonsäure oder Mischungen davon, vorzugsweise wie im Folgenenden ausgeführt: Adipinsäure, Azelainsäure, Sebacinsäure und Brassylsäure,
ii-b) 30 bis 70 mol-%, vorzugsweise 40 bis 60 und insbesondere bevorzugt 40 bis 50 mol-%, bezogen auf die Komponenten ii-a) und ii-b), einer aromatischen Dicarbonsäure oder Mischungen davon, vorzugsweise wie im Folgenenden ausgeführt: Terephthalsäure, ii-c) 99 bis 100 mol-%, bezogen auf die Komponenten ii-a) bis ii-b), 1,4-Butandiol und 1,3-Propandiol; und
ii-d) 0 bis 1 Gew.-%, vorzugsweise 0,1 bis 0,2 Gew.-%, bezogen auf die Komponenten ii-a) bis ii-c), eines Kettenverlängerers, insbesondere eines di- oder polyfunktionellen Isocyanats, vorzugsweise Hexamethylendiisocyanats und gegebenenfalls eines Verzweigers vorzugsweise: Trimethylolpropan, Pentaerythrit und insbesondere Glycerin.

Als aliphatische Disäuren und die entsprechenden Derivate ii-a kommen im Allgemeinen solche mit 6 bis 20 Kohlenstoffatomen, vorzugsweise 6 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 40 Kohlenstoffatomen, eingesetzt werden.

Beispielhaft zu nennen sind: 2-Methylglutarsäure, 3-Methylglutarsäure, α-Ketoglutarsäure, Adipinsäure, Pimelinsäure, Azelainsäure, Sebacinsäure, Brassylsäure, Suberinsäure (Korksäure), und Itaconsäure. Dabei können die Dicarbonsäuren oder deren esterbildenden Derivate, einzeln oder als Gemisch aus zwei oder mehr davon eingesetzt werden.

Bevorzugt werden Adipinsäure, Azelainsäure, Sebacinsäure, Brassylsäure oder deren jeweilige esterbildenden Derivate oder Mischungen davon eingesetzt. Besonders bevorzugt werden Adipinsäure oder Sebacinsäure oder deren jeweilige esterbildenden Derivate oder Mischungen davon eingesetzt.

Insbesondere bevorzugt sind die folgenden aliphatisch-aromatischen Polyester: Polybutylenadipatterephthalat (PBAT), Polybutylensebacatterephthalat (PBSeT), Polybutylenadipat-cosebacatterephthalat, sowie Mischungen dieser Polyester.

Die aromatischen Dicarbonsäuren oder deren esterbildende Derivate ii-b können einzeln oder als Gemisch aus zwei oder mehr davon eingesetzt werden. Besonders bevorzugt wird Terephthalsäure oder deren esterbildende Derivate wie Dimethylterephthalat, verwendet.

Die Diole ii-c - 1,4-Butandiol und 1,3- Propandiol - sind als nachwachsender Rohstoff zugänglich. Es können auch Mischungen der genannten Diole verwendet werden.

In der Regel werden 0 bis 1 Gew-%, vorzugsweise 0,1 bis 1,0 Gew.-% und insbesondere bevorzugt 0,1 bis 0,3 Gew.-%, bezogen auf das Gesamtgewicht des Polyesters, eines Verzweigers und/oder 0,05 bis 1 Gew-%, vorzugsweise 0,1 bis 1,0 Gew.- %, bezogen auf das Gesamtgewicht des Polyesters, eines Kettenverlängerers (ii-d) eingesetzt. Bevorzugt sind die gleichen Verzweiger und Kettenverlängerer (ii-d) wie die zuvor detailliert beschriebenen Verzweiger und Kettenverlängerer (i-d).

Die Polyester ii weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Der MVR (Schmelzvolumenrate) nach EN ISO 1133-1 DE (190°C, 2,16 kg Gewicht) liegt im Allgemeinen bei 0,5 bis 20, bevorzugt bei 5 bis 15 cm³/10 min. Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Als steife Komponente iii wird Polymilchsäure (PLA) eingesetzt.

Polymilchsäure mit dem folgenden Eigenschaftsprofil wird bevorzugt eingesetzt:
- einer Schmelzvolumenrate (MVR bei 190° C und 2.16 kg nach ISO 1133-1 DE von 15 bis 50 und insbesondere von 20 bis 40 cm³/10 Minuten)
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%
- einem Molekulargewicht von größer 80 000 Dalton.

Bevorzugte Polymilchsäuren sind beispielsweise NatureWorks® 6201 D, 6202 D, 6251 D, 3051 D und insbesondere 3251 D sowie kristallinen Polymilchsäuretypen der Fa. NatureWorks und Polymilchsäuren der Fa. Total Corbion wie beispielsweise Luminy® L105.

Die Polymilchsäure iii wird in einem Gewichtsprozent-Anteil, bezogen auf die Komponenten i und v, von 16,2 bis 30,65, vorzugsweise von 19,3 bis 28% eingesetzt. Hierbei bildet vorzugsweise die Polymilchsäure iii die disperse Phase und der Polyester i die kontinuierliche oder ist Teil einer cokontinuierlichen Phase. Polymermischungen mit Polyester i in der kontinuierlichen Phase oder als Teil einer cokontinuierlichen Phase weisen eine höhere Wärmeformbeständigkeit auf als Polymermischungen, in denen Polymilchsäure iii die kontinuierliche Phase bildet. Um eine gute Wärmeformbeständigkeit im Spritzgussartikel zu gewährleisten (HDT-B Temperatur nach DIN EN ISO 75-2:2004-09 von 85 bis 105 °C) sollte das Verhältnis der Komponente i zur Komponente iii im Compound, aus dem die Artikel hergestellt werden, 2,0 bis 3,2 und vorzugsweise 2,3 bis 3,1 betragen.

In der Regel werden 4 bis 15 Gew.-%, insbesondere 5,55 bis 12 Gew.-%, bezogen auf das Gesamtgewicht der Komponenten i bis v, mindestens eines mineralischen Füllstoffs iv ausgewählt aus der Gruppe bestehend aus: Kreide, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum und Mineralfasern eingesetzt.

Kaolin und Talkum sind als Füllstoffe besonders bevorzugt. Mit Talkum wiederum lässt sich effektiver das E-Modul erhöhen und die Wärmeformbeständigkeit verbessern.

Üblicherweise werden 0,35 bis 0,8 Gew.-%, insbesondere 0,45 bis 0,7 Gew.-%, bezogen auf das Gesamtgewicht der Komponenten i bis v, mindestens eines Entformungshilfsmittels v ausgewählt aus der Gruppe bestehend aus: Wachse wie beispielsweise Erucasäureamid, Stearinsäureamid oder Behensäureamid, Bienenwachs oder Bienenwachsester eingesetzt. Bevorzugt werden Behensäureamid und insbesondere bevorzugt Erucasäureamid eingesetzt. Größere Mengen des Entformungshilfsmittels führen zu Wolkenbildung auf den Spritzgussartikeln. Kleinere Mengen des Entformungshilfsmittels führen zur unvollständigen Befüllung der Kavitäten der Spritzgussformen. Dieses Problem tritt insbesondere bei der Herstellung von dünnwandigen Spritzgussartikeln und bei der Befüllung von Mehrfachkavitäten-Werkzeuge, sowie größeren Kavitäten wie K-Cups auf.

Weiterhin kann der erfindungsgemäße Compound der Komponenten i bis v weitere dem Fachmann bekannte, Additive enthalten. Beispielsweise die in der Kunststofftechnik üblichen Zusatzstoffe wie Stabilisatoren; Nukleierungsmittel wie die bereits obengenannten mineralischen Füllstoffe v oder auch kristalline Polymilchsäure; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Antistatikum, UV-Absorbers; UV-Stabilisators; Antifog-Mittel oder Farbstoffe. Die Additive werden in Konzentrationen von 0 bis 2 Gew.-%, insbesondere 0,1 bis 2 Gew.-% bezogen auf den erfindungsgemäßen Compound i bis v eingesetzt. Weichmacher können in 0,1 bis 10 Gew.-% in dem erfindungsgemäßen Compound i bis v enthalten sein.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% nach 180 Tagen aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definiertem Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Beim Spritzgießen, das auch als Spritzguss oder Spritzgussverfahren bezeichnet wird handelt es sich um ein Formgebungsverfahren, das in der Kunststoffverarbeitung sehr häufig verwendet wird. Im Spritzguss lassen sich äußerst wirtschaftlich direkt verwendbare Formteile in großer Stückzahl herstellen. Das Verfahren funktioniert vereinfacht wie folgt: In einer Spritzgießmaschine, die aus einem beheizbaren Zylinder, in der sich Schneckenwelle dreht, besteht, wird der jeweilige thermoplastische Werkstoff ("Formmasse"), geschmolzen und in eine Form aus Metall ("Werkzeug") eingespritzt. Der Hohlraum des Werkzeugs bestimmt die Form und die Oberflächenstruktur des fertigen Teils. Es sind heute Teile von deutlich unter einem Gramm bis in den zweistelligen Kilogramm-Bereich herstellbar.

Durch Spritzgießen lassen sich Gebrauchsgegenstände mit hoher Genauigkeit wirtschaftlich und in kurzer Zeit produzieren. Die Beschaffenheit der Oberfläche des jeweiligen Bauteils kann dabei von den Konstrukteuren nahezu frei gewählt werden. Von glatten Oberflächen für optische Anwendungen, über Narbungen für berührungsfreundliche Bereiche, bis hin zu Mustern oder Gravuren lassen sich eine Vielfalt von Oberflächenstrukturen darstellen.

Das Spritzgussverfahren eignet sich aus wirtschaftlichen Gründen insbesondere für die Produktion größerer Stückzahlen, wie Verpackungsartikel.

Artikel wie Pralinenschachteleinlagen, Spielekartoneinsätze, Klappblister für alle möglichen Kleinartikel an Lochrasterwänden im Einzelhandel, Joghurt- oder Margarinebecher sind weit verbreitet. Ein bevorzugter Artikel sind Deckel für Kaffeebecher oder andere Becher für Heissgetränke, sowie Gebinde zur Abfüllung von heißen Lebensmitteln.

Ein besonders bevorzugter Spritzgussartikel ist die Kaffeekapsel. Unter Kaffeekapsel wird ein Gebinde von 1 ml bis 80 ml Füllvolumen, vorzugsweise 3 bis 50 ml, verstanden. Dieses Gebinde wird mit einem pulverförmigen Lebensmittel, insbesondere Kaffeepulver oder einer Mischung aus pulverförmigen Lebensmitteln befüllt. Unter Lebensmittel wird neben Kaffee, Tee, Milch, Kakao und Suppenextrakte verstanden. Die Form des Gebindes kann rotationssymmetrisch, kegelförmig, kugelförmig, als auch eckig sein, vorzugswiese jedoch rotationssymmetrisch und hauptsächlich zylindrisch sein. Dieses Gebinde dient zum einen zur Lagerung des/der Lebensmittel sowie zum Zubereiten eines wässrigen Heißgetränks welches durch das Durchströmen von heißem Wasser (zwischen 60 und 100°C) in einem anschließenden Schritt hergestellt wird.

Das durchströmende Wasser löst beim Durchströmen des Gebindes Geschmacks- und Bitterstoffe und bildet so das Heißgetränk. Das Gebinde soll durch Spritzguss gefertigt werden. Die hierzu verwendete Wanddicke der Flachfolie, die das/die Gebinde bilden, hat eine Dicke von 100 bis 1000 µm, vorzugsweise 250 bis 800 µm, und insbesondere von 255 bis 550 µm. Der Artikel kann aus einer und vorzugsweise aus mehreren Schichten bestehen. Mindestens eine Schicht enthält den eingangs beschriebenen Compound der Komponenten i) bis v). Eine weitere Schicht des fertig geformten Gebindes bildet vorzugsweise eine Barriere-bildende Schicht. Der Mehrschichtaufbau kann durch Co-injection bei der Mehrschichtherstellung hergestellt werden, beispielsweise durch Drucken, Aufsprühen oder Plasmabeschichtung, prinzipiell mit dem Auftragen einer Dispersion, eines Lackes oder eines weiteren Polymer-basierten oder Polymerbeinhaltenden Systems oder dem Aufbringen einer metallischen- oder oxyd-haltigen Schicht, vorzugsweise jedoch durch eine polymerbasierte oder metallisierte Schicht. Als metallisierte Schicht kommt beispielsweise Aluminium in Frage, als polymerbasierte Schicht eignen sich Schichten enthaltend Polyglykolsäure (PGA), Polyhydroxyalkanoate (PHA) wie z.B. Poly-3-hydroxybutyrat (PHB), Poly-3-hydroxybutyrat-co-3-hydroxyvalerat (PHB(V)), Poly-3-hydroxybutyrat-co-3-hydroxyhexanoat (PHB(H)) oder Poly-3-hydroxybutyrat-co-4-hydroxyvalerat; Polyvinylalkohol (PVOH), Polyvinylidenchlorid (PVDC) oder Ethylenvinylalkohohol (EVOH). Diese Barriereschicht ist gekennzeichnet durch eine Sauerstofftransmissionsrate (oxygen transmission rate (OTR)) gemessen an dem gesamten Folienverbund nach der Gebindeherstellung nach ASTM D1434 von 0 bis 1000 g/m²/d, sowie einer Wasserdampftransmissionsrate (water vapor transition rate) nach ASTM F1249 von 0 bis 1000 g/m²/d, sowie vorzugsweise einer gleichzeitigen Aromabarriere.

Die gute Sauerstoffbarriere bzw. Aromabarriere lässt sich auch mittels einer Umverpackung für eine oder mehrere Kaffeekapseln erzielen. Geeignete Umverpackungen können mit einem Barrierefilm beschichtete Kunststofffolien oder Papierfolien sein.

Für das Spritzgussverfahren eignen sich insbesondere Compounds der Komponenten i bis v mit einem MVR (190 °C, 2,16 kg) nach ISO 1133-1 vom 01.03.2012 von 8 bis 50 cm³/10 min, insbesondere bevorzugt 14 bis 40 cm³/10 min.

Anwendungstechnische Messungen:
Die Molekulargewichte Mn und Mw der teilaromatischen Polyester wurde gemäß DIN 55672-1 mittels SEC bestimmt: Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards.

Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Der E-Modul wurde mittels eines Zugversuchs an Zugstäben mit einer Dicke von etwa 420 µm gemäß ISO 527-3: 2003 bestimmt.

Die Charpy Schlagzähigkeit wurde gemäß DIN EN 179-1/1eU:2000+Amd.A (gemessen bei 23 °C, 50% rel. F.) bestimmt. Der Probekörper (80mm x 10 mm x4 mm), gelagert nahe an seinen Enden als waagerechter Balken, wird durch einen einzelnen Schlag eines Pendels beansprucht, wobei die Aufschlaglinie in der Mitte zwischen den beiden Probekörper-Widerlagern liegt und (der Probekörper) mit einer hohen, nominell konstanten Geschwindigkeit (2,9 oder 3,8 m/s) gebogen wird.

Die Wärmeformbeständigkeit HDT-B wurde gemäß DIN EN ISO 75-2:2004-9 bestimmt. Ein Standardprobekörper wird einer Dreipunktbiegung unter konstanter Last ausgesetzt, um eine Biegespannung (HDT/B 0.45 MPa) zu erzeugen, die in dem betreffenden Teil dieser Internationalen Norm angegeben wird. Die Temperatur wird mit gleichförmiger Geschwindigkeit (120 K/h) erhöht, und der Temperaturwert, bei dem eine festgelegte Standarddurchbiegung, die der festgelegten Biegedehnungserhöhung (0.2%) entspricht, erreicht wird, wird gemessen.

### 1. Ausgangsstoffe

Polyester i:
i-1 Polybutylensuccinat: BioPBS® FZ71PM der Firma PTT MCC Biochem Company Ltd. (MFR bei 22 cm³/10 min (190°C, 2,16 kg))

Polyester ii:
ii-1 Polybutylenadipat-coterephthalat: ecoflex® F C1300 der Firma BASF SE (MVR bei 8,5 cm³/10 min (190°C, 2,16 kg)
ii-2 Polybutylensebacat-coterephthalat: ecoflex® FS C1300 der Firma BASF SE (MVR bei 7,0 cm³/10 min (190°C, 2,16 kg)

Komponente iii:
iii-1 Polymilchsäure: (PLA) Ingeo® 3251 D der Firma NatureWorks (MVR bei 35 cm³/10 min (190°C, 2,16 kg))

Komponente iv:
iv-1 Talc IT extra der Firma Mondo Minerals

Komponente v:
v-1 Erucasäureamid: Crodamide™ ER der Fa. Croda International Plc

### 2. Compoundierung

Die in Tabelle 1 aufgeführten Compounds wurden auf einem Extruder des Typs Coperion MC 40 gefertigt. Die Temperaturen am Austritt wurden auf 250°C eingestellt. Anschließend wurde das Extrudat unter Wasser granuliert. Im Anschluss an die Granulatherstellung wurde das Granulat bei 60°C getrocknet.

### 3. Herstellung der Artikel (allgemeien Vorschrift AV)

Das Spritzgießen des compoundierten Materials wurde auf einer Spritzgießmaschine vom Typ Ferromatik Millacron K65 mit einer 30,00 mm Schnecke durchgeführt. Das Spritzgießwerkzeug war ein Einfach- oder Mehrfachkavitätenwerkzeug mit offenem Heißkanal. Gefertigt wurde mittels der CAMPUS Werkzeuge der Normen ISO 179/1eU und ISO 527-1/-2. Die Werkzeugtemperatur betrug 30°C, Die Werkzeuge wurden mit einem Druck von 560 bar und einem Nachdruck von 800 bar gefüllt.

**Tabelle 1- mit AV hergestellte Artikel;**

| Beispiel | V1 | 2 | V3 | V4 |
|---|---|---|---|---|
| i-1 | 55 | 60 | 55 | 60 |
| ii-2 | 4,7 | 4,5 | 4,5 | 4,7 |
| iii-1 | 20 | 25 | 20 | 25 |
| iv-1 | 20 | 10 | 20 | 10 |
| v-1 | 0,3 | 0,5 | 0,5 | 0,3 |
| i/iii-Verh. | 2,75 | 2,4 | 2,75 | 2,4 |
| | | | | |
| HDT/B (° C) | | | | |
| Charpy (kJ/m²) | | | | |
| E-Modulus (MPa) | | | | |
| MVR (cm³/10 min) | 13,10 | 20,16 | 14,16 | 18,89 |

### 4. Rheologische Charakterisierung der hergestellten Polymermischungen

Die rheologischen Eigenschaften des compoundierten Materials wurden bei 200 °C auf einem Göttfert Rheograph mit einer Kreiskapillare mit der Länge 30 mm und einem Radius von 0,5 mm (L/R = 60) untersucht. Die Proben wurden vor der Messung 24 h bei 50 °C getrocknet und die Vorheizzeit betrug 5 min. Die Messung wurde wie oben angegeben in Anlehnung an DIN 53014-1-1994-02 durchgeführt.

**Tabelle 2- über Kapillarrheologie ermittelte scheinbare Viskosität [Pa*s] der hergestellten Artikel bei einer Temperatur von 200 °C.**

| Scheinbare Scherrate [1/s] | V1 | 2 | V3 | V4 |
|---|---|---|---|---|
| 50,0 | 459,7 | 360,1 | 434,0 | 375,2 |
| 100,0 | 363,8 | 282,6 | 338,6 | 299,4 |
| 200,0 | 283,0 | 229,4 | 265,7 | 241,8 |
| 500,0 | 198,5 | 167,5 | 188,4 | 176,7 |
| 1000,0 | 145,5 | 126,9 | 139,7 | 133,3 |
| 2000,0 | 102,8 | 91,7 | 99,1 | 95,9 |
| 5000,0 | 60,4 | 55,0 | 58,3 | 57,2 |
| 10000,0 | 38,4 | 35,5 | 37,2 | 36,7 |

Aus Tabelle 2 ist erkennbar, dass besonders bei niedrigen Scherraten die scheinbare Viskosität des erfindungsgemäßen Beispiels deutlch verringert ist. Aber auch bei den für Spritzgussprozessen typischen, hohen Scherraten weist das erfindungsgemäße Beispiel eine signifikant reduzierte scheinbare Viskosität auf.

## Patentansprüche

1. Spritzgussartikel mit einer HDT-B Temperatur nach DIN EN ISO 75-2:2004-09 von 79 bis 105 °C enthaltend:
i) 55 bis 65 Gew.-%, bezogen auf das Gesamtgewicht der Komponenten i bis v, eines biologisch abbaubaren Polyesters enthaltend:
i-a) 80 bis 100 mol %, bezogen auf die Komponenten i-a bis i-b, Bernsteinsäure;
i-b) 0 bis 20 mol %, bezogen auf die Komponenten i-a bis i-b, einer oder mehrerer C₆-C₂₀ Dicarbonsäuren;
i-c) 99 bis 102 mol %, bezogen auf die Komponenten i-a bis i-b, 1,3 Propandiol oder 1,4-Butandiol;
i-d) 0 bis 1 Gew.- %, bezogen auf die Komponenten i-a bis i-c eines Kettenverlängerers oder Verzweigers;
ii) 3 bis 10 Gew.- %, bezogen auf das Gesamtgewicht der Komponenten i bis v, eines aliphatisch-aromatischen Polyesters enthaltend:
ii-a) 30 bis 70 mol %, bezogen auf die Komponenten ii-a bis ii-b, einer C₆-C₁₈-Dicarbonsäure;
ii-b) 30 bis 70 mol %, bezogen auf die Komponenten ii-a bis ii-b, Terephthalsäure;
ii-c) 98 bis 100 mol %, bezogen auf die Komponenten ii-a bis ii-b, 1,3 Propandiol oder 1,4-Butandiol;
ii-d) 0 bis 1 Gew.- %, bezogen auf die Komponenten ii-a bis ii-c eines Kettenverlängerers oder Verzweigers;
iii) 16,2 bis 30,65 Gew.-%, bezogen auf das Gesamtgewicht der Komponenten i bis v, Polymilchsäure;
iv) 4 bis 15 Gew.-%, bezogen auf das Gesamtgewicht der Komponenten i bis v, mindestens eines mineralischen Füllstoffs;
v) 0,35 bis 0,8 Gew.-%, bezogen auf das Gesamtgewicht der Komponenten i bis v, mindestens eines Entformungshilfsmittels;
wobei für den Compound der Komponenten i bis v gilt, dass das Verhältnis der Komponente i zur Komponente iii im Compound 2,0 bis 3,2 beträgt und der MVR nach DIN EN 1133-1 vom 01.03.2012 (190°C, 2,16 kg) des Compounds 8 bis 50 cm³/10 min beträgt.

2. Artikel nach Anspruch 1, wobei das Verhältnis der Komponente i zur Komponente iii 2,3 bis 3,1 beträgt.

3. Artikel nach Anspruch 1 oder 2, wobei 8 bis 12 Gew.-% eines mineralischen Füllstoffs eingesetzt werden.

4. Artikel nach Anspruch 1 bis 3, wobei als Füllstoff Talkum eingesetzt wird.

5. Artikel nach Anspruch 1 bis 4, wobei 0,45 bis 0,7 Gew.-% Entformungshilfsmittel eingesetzt wird.

6. Artikel nach Anspruch 1 bis 5, wobei das Entformungshilfsmittel Stearinsäureamid, Behensäureamid oder Erucasäureamid ist.

7. Artikel nach Anspruch 6, wobei das Entformungshilfsmittel Erucasäureamid ist.

8. Artikel nach einem der Ansprüche 1 bis 7 mit einem Füllvolumen von 1 bis 80 ml, mit einer Sauerstofftransmissionsrate nach ASTM D1434 von 0 bis 1000 g/m²/d, geeignet zur Herstellung von Kaffeekapseln.

9. Artikel nach Anspruch 8 mit einer Wandstärke kleiner 1 mm, vorzugsweise kleiner 0,8 mm.

10. Verfahren zur Herstellung der Artikel gemäß Amspruch 1 bis 9 in einem Mehrfachkavitätenwerkzeug.

11. Verwendung eines Artikels nach einem der Ansprüche 1 bis 7 als Mikrowellengeschirr oder Deckel von Bechern für Heißgetränke.

## Claims

1. An injection-molded item with HDT-B temperature of from 79 to 105°C in accordance with DIN EN ISO 75-2:2004-09, comprising:
i) from 55 to 65% by weight, based on the total weight of components i to v, of a biodegradable polyester comprising:
i-a) from 80 to 100 mol%, based on components i-a to i-b, of succinic acid;
i-b) from 0 to 20 mol%, based on components i-a to i-b, of one or more C₆-C₂₀ dicarboxylic acids;
i-c) from 99 to 102 mol%, based on components i-a to i-b, of 1,3-propanediol or 1,4-butanediol;
i-d) from 0 to 1% by weight, based on components i-a to i-c, of a chain extender or branching agent;
ii) from 3 to 10% by weight, based on the total weight of components i to v, of an aliphatic-aromatic polyester comprising:
ii-a) from 30 to 70 mol%, based on components ii-a to ii-b, of a C₆-C₁₈-dicarboxylic acid;
ii-b) from 30 to 70 mol%, based on components ii-a to ii-b, of terephthalic acid;
ii-c) from 98 to 100 mol%, based on components ii-a to ii-b, of 1,3-propanediol or 1,4-butanediol;
ii-d) from 0 to 1% by weight, based on components ii-a to ii-c, of a chain extender or branching agent;
iii) from 16.2 to 30.65% by weight, based on the total weight of components i to v, of polylactic acid;
iv) from 4 to 15% by weight, based on the total weight of components i to v, of at least one mineral filler;
v) from 0.35 to 0.8% by weight, based on the total weight of components i to v, of at least one demolding aid;
where the following applies to the compounded material comprising components i to v: the ratio of component i to component iii in the compounded material is from 2.0 to 3.2, and the MVR of the compounded material is from 8 to 50 cm³/10 min in accordance with DIN EN 1133-1 of March 1, 2012 (190°C, 2.16 kg).

2. The item according to claim 1, where the ratio of component i to component iii is from 2.3 to 3.1.

3. The item according to claim 1 or 2, where from 8 to 12% by weight of a mineral filler is used.

4. The item according to claim 1 to 3, where the filler used is talc powder.

5. The item according to claim 1 to 4, where 0.45 to 0.7% by weight of demolding aid is used.

6. The item according to claim 1 to 5, where the demolding aid is stearamide, behenamide or erucamide.

7. The item according to claim 6, where the demolding aid is erucamide.

8. The item according to any of claims 1 to 7 with a volume capacity of from 1 to 80 ml, with an oxygen transmission rate of from 0 to 1000 g/m²/d in accordance with ASTM D1434, suitable for the production of coffee capsules.

9. The item according to claim 8 with a wall thickness of less than 1 mm, preferably less than 0.8 mm.

10. A process for producing the item according to claim 1 to 9 in a multicavity mold.

11. The use of an item according to any of claims 1 to 7 as microwave tableware or lids of cups for hot drinks.

## Revendications

1. Article moulé par injection doté d'une température HDT-B selon la norme DIN EN ISO 75-2:2004-09 de 79 à 105 °C contenant :
i) 55 à 65 % en poids, par rapport au poids total des composants i à v, d'un polyester biodégradable contenant :
i-a) 80 à 100 % en moles, par rapport aux composants i-a à i-b, d'acide succinique ;
i-b) 0 à 20 % en moles, par rapport aux composants i-a à i-b, d'un ou plusieurs acides dicarboxyliques en C₆₋₂₀ ;
i-c) 99 à 102 % en moles, par rapport aux composants i-a à i-b, de 1,3-propanediol ou de 1,4-butanediol ;
i-d) 0 à 1 % en poids, par rapport aux composants i-a à i-c, d'un extenseur de chaînes ou d'un agent de ramification ;
ii) 3 à 10 % poids, par rapport au poids total des composants i à v, d'un polyester aliphatique-aromatique contenant :
ii-a) 30 à 70 % en moles, par rapport aux composants ii-a à ii-b, d'un acide dicarboxylique en C₆₋₁₈ ;
ii-b) 30 à 70 % en moles, par rapport aux composants ii-a à ii-b, d'acide téréphtalique ; ii-c) 98 à 100 % en moles, par rapport aux composants ii-a à ii-b, de 1,3-propanediol ou de 1,4-butanediol ;
ii-d) 0 à 1 % en poids, par rapport aux composants ii-a à ii-c, d'un extenseur de chaînes ou d'un agent de ramification ;
iii) 16,2 à 30,65 % en poids, par rapport au poids total des composants i à v, de poly(acide lactique) ;
iv) 4 à 15 % en poids, par rapport au poids total des composants i à v, d'au moins une charge minérale ;
v) 0,35 à 0,8 % en poids, par rapport au poids total des composants i à v, d'au moins un agent de démoulage ;
dans lequel pour le compound des composants i à v, le rapport du composant i sur le composant iii dans le compound est de 2,0 à 3,2 et le MVR selon la norme DIN EN 1133-1 du 01.03.2012 (190 °C, 2,16 kg) du compound est de 8 à 50 cm³/10 min.

2. Article selon la revendication 1, le rapport du composant i sur le composant iii étant de 2,3 à 3,1.

3. Article selon la revendication 1 ou 2, 8 à 12 % en poids d'une charge minérale étant utilisée.

4. Article selon les revendications 1 à 3, du talc étant utilisé en tant que charge.

5. Article selon les revendications 1 à 4, 0,45 à 0,7 % en poids d'agent de démoulage étant utilisé.

6. Article selon la revendication 1 à 5, l'agent de démoulage étant l'amide de l'acide stéarique, l'amide de l'acide béhénique ou l'amide de l'acide érucique.

7. Article selon la revendication 6, l'agent de démoulage étant l'amide de l'acide érucique.

8. Article selon l'une quelconque des revendications 1 à 7 doté d'un volume de remplissage de 1 à 80 ml, doté d'une vitesse de transmission d'oxygène selon la norme ASTM D1434 de 0 à 1 000 g/m²/jour, approprié pour la préparation de capsules de café.

9. Article selon la revendication 8 doté d'une épaisseur de paroi inférieure à 1 mm, de préférence inférieure à 0,8 mm.

10. Procédé pour la préparation des articles selon les revendications 1 à 9 dans un outil à plusieurs cavités.

11. Utilisation d'un article selon l'une quelconque des revendications 1 à 7 en tant que vaisselle pour micro-ondes ou couvercle de gobelets pour des boissons chaudes.
